# EUROPÄISCHE PATENTSCHRIFT

(11) **EP 2 841 327 B1**
(45) Veröffentlichungstag und Bekanntmachung des Hinweises auf die Patenterteilung: **08.04.2020**
(21) Anmeldenummer: 13708375.4
(22) Anmeldetag: 25.02.2013
(51) Int. Cl.: B62M 6/45, B62M 6/50

(54) **VERFAHREN UND VORRICHTUNG ZUR STEUERUNG EINES PEDALFAHRZEUGS**
METHOD AND DEVICE FOR CONTROLLING A PEDAL VEHICLE
PROCÉDÉ ET DISPOSITIF DE COMMANDE D'UN VÉHICULE À PÉDALE

(30) Priorität: 23.04.2012 DE 102012206615
(43) Veröffentlichungstag der Anmeldung: 04.03.2015
(73) Patentinhaber: Robert Bosch GmbH, 70442 Stuttgart (DE)
(72) Erfinder: DASBACH, Gregor, 72762 Reutlingen (DE); BRAUN, Sigmund, 72127 Kusterdingen (DE)
(86) Internationale Anmeldenummer: PCT/EP2013/053698
(87) Internationale Veröffentlichungsnummer: WO 2013/159952

(56) Entgegenhaltungen:
- FR-A1- 2 768 991
- JP-A- H1 149 078
- JP-A- H1 159 557
- JP-A- H04 358 988
- JP-A- H10 324 290

## Beschreibung

Die Erfindung betrifft ein Verfahren sowie eine Vorrichtung zur Steuerung des Motors eines Pedalfahrzeugs.

### Stand der Technik

Seit einigen Jahren nimmt die Nutzung von Zweirädern zu, die sowohl einen muskelbetriebenen als auch einen motorbetriebenen Antrieb haben. Sogenannte Elektrofahrräder wie Ebikes oder Pedelec weisen dabei sowohl ein Antriebssystem mittels Pedalen als auch eines eingebauten Motors auf. Je nach Ausgestaltung des Elektrofahrrads kann der Motor dabei bei der normalen Nutzung den alleinigen Antrieb oder auch nur einen den Fahrer bei der Pedalbetätigung unterstützende Anteil an der Fortbewegung liefern.

Zusätzlich erlaubt der eingebaute Motor auch eine Unterstützung des Fahrers während eines Schiebevorgangs. In diesem Fall ist eine Betätigung der Pedale durch den Fahrer nicht vorgesehen, so dass am Elektrofahrrad ggf. ein spezieller Unterstützungsmodus eingestellt werden muss. Die Schrift FR 2 768 991 A1 beschreibt ein Verfahren zur Regelung eines Elektromotors eines Elektrofahrrads zur Erzeugung eines Antriebsdrehmoments beim Schieben des Elektrofahrrads, wobei die Unterstützungsleistung des Elektromotors in Abhängigkeit einer erfassten Schiebekraft geregelt wird.

Um den Motor als Schiebehilfe zu verwenden, kann beispielsweise mittels einer entsprechenden Einstellung im HMI oder Steuergerät des Elektrofahrrads die gewünschte Unterstützung eingestellt werden. Anschließend kann der (schiebende) Fahrer das Fahrzeug ohne große Anstrengung bewegen, da der Motor das Elektrofahrrad in Laufrichtung quasi alleine bewegt, ohne dass eine Pedalbetätigung durch den Fahrer notwendig ist. Dies hat den Vorteil, dass der Fahrer das Elektrofahrrad leichter über (Kinderwagen-) Rampen mit seitlichen oder mittigen Treppenstufe bewegen kann. Dabei ist jedoch zu bedenken, dass sich die fest mit dem Motor gekoppelten und sich mitdrehenden Pedalen auf der Höhe der Beine des (schiebenden) Fahrers befinden. Da der
Fahrer in dieser (oder einer ähnlichen) Situation ggf. nur ungenügend auf die drehenden Pedalen aufmerksam ist, kann es leicht zu einer Verletzung der Beine durch die Pedalen kommen, zumal der Motor die Pedalen weiter antreibt.

Darüber hinaus ist auch bei einem plötzlichen Hindernis, auf das die Pedale stoßen können, z.B. auf eine Treppenstufe oder einen Stein, ein Gefährdungspotential vorhanden, da das sichere Schieben des Fahrzeugs durch diese Behinderung beeinträchtigt wird.

### Offenbarung der Erfindung

Mit der vorliegenden Erfindung wird ein Verfahren sowie eine Steuerungsvorrichtung für ein pedal- und motorbetriebenes Fahrzeug, z.B. eine Fahrrad beschrieben. Dabei ist vorgesehen, dass der Motor in dem Fahrzeug den Fahrer wenigstens beim Schieben unterstützen kann. Der Kern der Erfindung betrifft dabei die Möglichkeit der Steuerung, diesen selbsttätigen Antrieb des Motor beim Schiebevorgang in bestimmten Situationen wenigstens kurzzeitig zu verändern, z.B. zu verringern oder ganz zu stoppen.

Der Vorteil dabei ist, dass der Fahrer während des Schiebevorgangs zwar einerseits durch den motorgetriebenen Antrieb eine Erleichterung erfährt, jedoch aufgrund eines plötzlichen Widerstands der Pedaldrehung durch einen unkontrollierten Antrieb nicht verletzt wird.

Erfindungsgemäß wird zur Vermeidung eines derartigen ungewollten Antriebs die Bewegung bzw. der Zustand wenigstens eines Pedals erfasst. In Abhängigkeit von dieser Bewegung bzw. dem Zustand wird dann der Antrieb bzw. die Antriebsleistung des Motors wenigstens kurzzeitig verändert bzw. verringert.

In einer Ausgestaltung der Erfindung wird die Pedalbewegung in Abhängigkeit von dem anliegenden Drehmoment, der (Dreh-)Geschwindigkeit bzw. der Beschleunigung/dem Abbremsverhalten der Pedale, der Drehzahl und/oder der auf die Pedale wirkende Kraft erfasst.

Vorteilhafterweise ist vorgesehen, die Bewegungs- oder Zustandsgröße der wenigstens einen Pedale mit einem Schwellenwert zu vergleichen, um in Abhängigkeit der Über- oder Unterschreitung dieses Schwellenwert den Antrieb des Fahrzeugs wenigstens kurzfristig zu verändern. So ist beispielsweise vorgesehen, dass bei einer plötzlichen Abbremsung der Pedalbewegung oder einer erfassten Gegenkraft, die beim Auftreffen der Pedale auf ein Hindernis auftritt, die Antriebsleistung des Motors heruntergefahren oder sogar gänzlich abgeschalten wird.

Optional kann auch vorgesehen sein, dass der Motor bzw. der Antrieb nur kurzzeitig unterbrochen wird, woraufhin nach einer vorbestimmten Zeitdauer eine erneute Überprüfung der Bewegung bzw. des Zustands der Pedale erfolgt.

Weitere Vorteile ergeben sich aus der nachfolgenden Beschreibung von Ausführungsbeispielen bzw. aus den abhängigen Patentansprüchen.

### Kurze Beschreibung der Zeichnungen

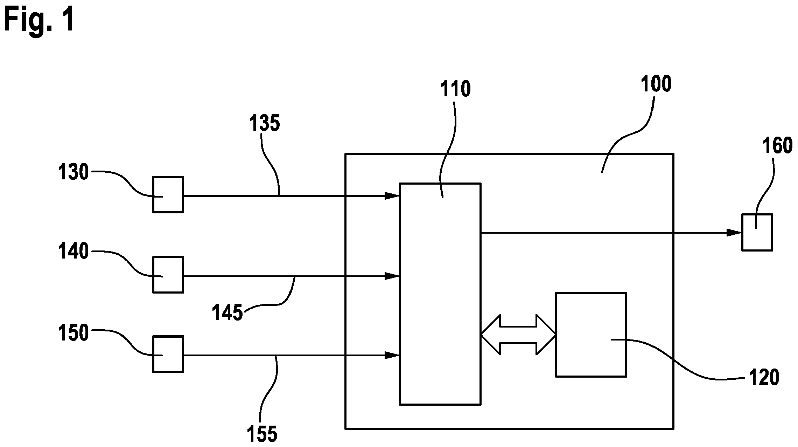

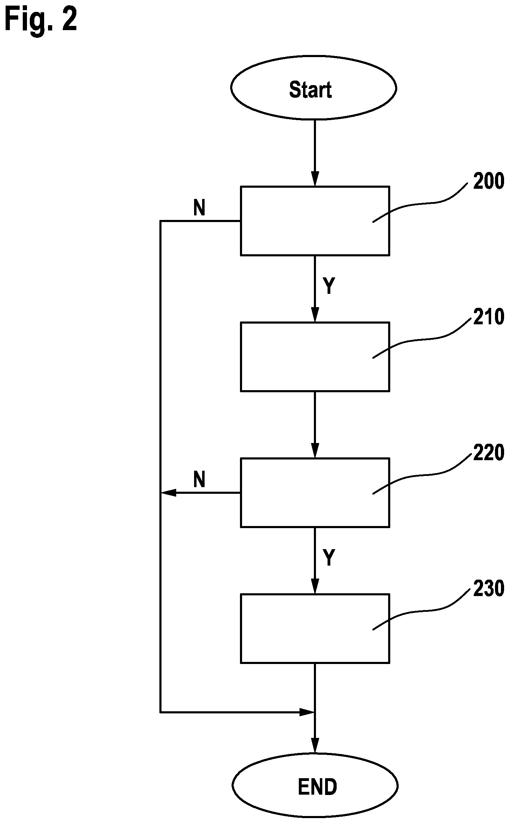

In der Figur 1 wird schematisch der Aufbau einer erfindungsgemäßen Vorrichtung gezeigt. Das Flussdiagramm der Figur 2 zeigt eine mögliche Realisierung des erfindungsgemäßen Steuerungsverfahrens.

### Ausführungsformen der Erfindung

Wie bereits eingangs ausgeführt, findet die Erfindung bei pedal- und motorbetriebenen Fahrzeugen, z.B. Elektrofahrrädern Einsatz, bei denen durch den Motor eine Schiebehilfe als Unterstützungsmodus vorgesehen ist, wobei die Pedalen und der Motor miteinander gekoppelt sind. Zur Überwachung der Pedalbewegung bzw. des Zustands der Pedalen ist eine Steuerungsvorrichtung 100 vorgesehen, die beispielsweise in einem HMI (Human-machine-interface) oder einer separaten Steuereinheit untergebracht sein kann. In dieser Steuerungseinheit 100 ist wie in Figur 1 gezeigt, eine Verarbeitungseinheit 110 vorgesehen, die einerseits mit wenigstens einem Sensor 130 und optional mit einem Speicher 120 in Verbindung steht. Ausgehend von der Sensorgröße, beispielsweise einem durch einen Drehmomentsensor 130 erfasste, Drehmoment 135 kann die Verarbeitungseinheit 110 ein Vergleich mit einem abgespeicherten Schwellenwert SW_{Dreh} durchführen. Je nach Ergebnis kann anschließend der Motor 160 angesteuert werden, z.B. indem das Antriebsmoment bzw. die gesamte Antriebsleistung teilweise oder ganz reduziert werden. Statt dem Drehmoment 135 der Pedalen kann auch mittels eines geeigneten Sensors 140 die (Dreh-)Geschwindigkeit, die Drehzahl oder die Beschleunigung der Pedalen überwacht werden. Auch mit diesen Größen 145 kann erkannt werden, ob die Pedalen auf ein Hindernis treffen und abrupt abgebremst werden. Schließlich kann auch ein Kraftsensor 150 verwendet werden, der direkt die Kraft 155 erfasst, die auf die Pedale wirkt, wenn sie gegen ein Hindernis stößt. Derartige Kraftsensoren 150 sind schon in einigen Elektrofahrrädern vorhanden, um die Betätigung der Pedale durch den Fahrer und somit den Grad der Unterstützung des Antriebs durch den Motor abzuschätzen. Selbstverständlich kann in dem Speicher 120 für jede der erfassten Größen ein entsprechender Schwellenwert abgespeichert und abrufbar sein.

Ein möglicher Ablauf des Überwachungs- bzw. Steuerungsverfahrens der Erfindung ist in der Figur 2 dargestellt. Dabei kann vorgesehen sein, dass der Algorithmus automatisch mit der Initialisierung des Unterstützungs- bzw. Schiebemodus gestartet wird. Alternativ kann jedoch auch ein weiterer Prüfschritt vorgeschaltet werden, der überprüft, ob die Geschwindigkeit des Fahrrads unterhalb einer vorgegebenen Schwelle liegt, z.B. einer Schwelle, die einem typischen Schiebeverhalten entspricht. Denkbar ist beispielsweise eine Schwelle von 4 bis 6 km/h vorzusehen. Mit dieser Überprüfung soll verhindert werden, dass eine ungewollte Unterbrechung des Antriebs während eines normalen Fahrtvorgangs erfolgt.

Nach dem Start des Algorithmus kann in einem ersten optionalen Schritt 200 überprüft werden, ob das Fahrrad sich überhaupt bewegt. Falls das Fahrrad steht, kann der Algorithmus unterbrochen werden. In diesem Fall ist jedoch davon auszugehen, dass auch der Unterstützungs- bzw. Schiebemodus ausgeschalten ist. Im nachfolgenden Schritt 210 wird dann eine Größe erfasst, die die Bewegung der Pedale bzw. den Zustand der Pedalbewegung charakterisiert. Wie bereits ausgeführt, kann diese Bewegung durch die Erfassung des Drehmoments 135, der (Dreh-)Geschwindigkeit 145, der Drehzahl, der Beschleunigung oder der auf die Pedale wirkenden Kraft 155 erkannt werden. Um eine Veränderung der Bewegung zu erkennen, beispielsweise durch das Auftreffen der Pedale auf ein Hindernis (z.B. Treppe, Stein, Wade, Bein), wird im nächsten Schritt 220 überprüft, ob die erfasste Größe eine abrupte Änderung erfährt. Dies wird im vorliegenden Schritt dadurch erreicht, dass überprüft wird, ob die Größe einen Schwellenwert übersteigt oder unterschreitet. So kann beispielsweise durch ein abruptes Abbremsen die (Be-)Hinderung der Bewegung der Pedale erkannt werden. Bei der Berücksichtigung des Drehmoments kann durch einen Anstieg der Größe erkannt werden, dass das Pedal auf ein Hindernis gestoßen ist. Hier kann ggf. ein Schwellenwert verwendet werden, der größer als Null ist, um kleinere Behinderungen zu übergehen. Im Allgemeinen kann jedoch ein Schwellenwert für diese Überprüfung verwendet werden, der von Null bzw. einem Wert, der nur gering von Null verschieden ist. Sollte dieser Schwellenwert nicht überschritten werden, d.h. wird festgestellt, dass sich die Pedale unbehindert bewegt bzw. die Behinderung nicht maßgeblich ist, wird der Algorithmus beendet. Andernfalls wird im Schritt 230 der Motor 160 angesteuert, der den Vortrieb für die Schiebehilfe liefert. Dabei kann die Motorleistung schrittweise, mittels einer Flanke oder sofort reduziert bzw. vollkommen abgeschalten werden.

In den Schritten 210 und 220 kann in einer alternativen Ausgestaltung auch die Erfassung von mehr als einer Größe und der Vergleich mit den entsprechenden Schwellenwerten durchgeführt werden. Dies hat den Vorteil, dass durch die Erfassung zweier unabhängiger Werte die Genauigkeit der Erkennung einer Behinderung der Pedale und somit bei der Bestimmung des Eingriffs in die Motorsteuerung erhöht wird.

Bei der Durchführung des Algorithmus in Figur 2 kann alternativ auch vorgesehen sein, dass vom Schritt 220 oder nach der Ansteuerung des Motors im Schritt 230 eine Schleife zum Schritt 200 oder 210 erfolgt.

## Patentansprüche

1. Verfahren zur Steuerung des Motors eines pedalbetriebenen Fahrzeugs, wobei vorgesehen ist, dass der Motor (160) einen Unterstützungsmodus aufweist, der den Fahrer beim Schieben des Fahrzeugs unterstützt,
**dadurch gekennzeichnet, dass**
das Verfahren im Unterstützungsmodus
• eine Zustandsgröße (135) wenigstens eines Pedals erfasst, wobei die Zustandsgröße ein Drehmoment (135) repräsentiert, und
• die Zustandsgröße (135) mit einem Schwellenwert verglichen wird, wenn ein Anstieg der Zustandsgröße (135) erkannt wird, wobei bei einer Überschreitung bzw. Unterschreitung des Schwellenwerts der Antrieb des Fahrzeugs wenigstens kurzzeitig verändert wird, wodurch
• der auf das Fahrzeugs wirkende Antrieb durch den Motor (160) unterbrochen wird, wenn bei der Berücksichtigung des Drehmoments durch einen Anstieg der Größe wenigstens ein Pedal auf ein Hindernis trifft.

2. Verfahren nach Anspruch 1, **dadurch gekennzeichnet, dass** die Zustandsgröße
• eine (Dreh-)Geschwindigkeit (145), und/oder
• eine Beschleunigung, und/oder
• eine Drehzahl und/oder
• eine auf das wenigstens eine Pedal wirkende Kraft (155) repräsentiert.

3. Verfahren nach Anspruch 1 oder 2, **dadurch gekennzeichnet, dass** der Schwellenwert Null bzw. eine positive Größe nahe Null beträgt.

4. Verfahren nach einem der vorhergehenden Ansprüche, **dadurch gekennzeichnet, dass** im Unterstützungsmodus der auf das Fahrzeug wirkende Antrieb durch den Motor (160) reduziert wird, wobei insbesondere vorgesehen ist, dass der Antrieb auf null reduziert wird.

5. Verfahren nach Anspruch 4, **dadurch gekennzeichnet, dass** der Motor (160) in Abhängigkeit von der Zustandsgröße des Pedals getaktet angesteuert wird, wobei nach einer Reduzierung bzw. Unterbrechung des Antriebs erneut eine Überprüfung der Zustandsgröße erfolgt.

6. Steuerungsvorrichtung mit einem Steuerungsverfahren für den Motor eines pedalbetriebenen Fahrzeugs nach einem der Ansprüche 1 bis 5,
wobei vorgesehen ist, dass der Motor (160) einen Unterstützungsmodus aufweist, der den Fahrer beim Schieben des Fahrzeugs unterstützt,
**dadurch gekennzeichnet, dass** die Steuerungsvorrichtung (100) im Unterstützungsmodus
• eine Zustandsgröße (135) wenigstens eines Pedals erfasst, wobei die Zustandsgröße ein Drehmoment (135) repräsentiert,
• die Zustandsgröße (135) mit einem Schwellenwert vergleicht, wenn ein Anstieg der Zustandsgröße (135) erkannt wird, wobei die Steuervorrichtung bei einer Überschreitung bzw. Unterschreitung des Schwellenwerts den Antrieb des Fahrzeugs wenigstens kurzzeitig verändert, wodurch
• der auf das Fahrzeugs wirkende Antrieb durch den Motor (160) wenigstens zeitweise unterbrochen wird, wenn bei der Berücksichtigung des Drehmoments durch einen Anstieg der Größe erkannt wird, dass wenigstens ein Pedal auf ein Hindernis trifft.

7. Steuerungsvorrichtung nach Anspruch 6, **dadurch gekennzeichnet, dass** die Steuerungsvorrichtung (100) als Zustandsgröße
• eine (Dreh)Geschwindigkeit (145), und/oder
• eine Beschleunigung, und/oder
• eine Drehzahl und/oder
• eine auf das wenigstens eine Pedal wirkende Kraft (155) erfasst.

8. Steuerungsvorrichtung nach Anspruch 6 oder 7, **dadurch gekennzeichnet, dass** die Steuerungsvorrichtung (100) die Zustandsgröße (135, 145, 155) mit einem Schwellenwert vergleicht, der eine Größe von Null bzw. nahe Null aufweist.

9. Pedalbetriebenes Fahrzeug mit einer Steuerungsvorrichtung (100) nach einem der Ansprüche 6 bis 8.

## Claims

1. Method for controlling the motor of a pedal-powered vehicle, it being provided that the motor (160) has an assistance mode which assists the rider during pushing of the vehicle,
**characterized in that**,
in the assistance mode, the method
• detects a state variable (135) of at least one pedal, the state variable representing a torque (135), and
• the state variable (135) being compared with a threshold value if a rise in the state variable (135) is detected, the drive of the vehicle being changed at least briefly in the case of the threshold value being exceeded or undershot, as a result of which
• the drive which acts on the vehicle by way of the motor (160) is interrupted if at least one pedal encounters an obstacle in the case of the consideration of the torque by way of a rise in the variable.

2. Method according to Claim 1, **characterized in that** the state variable represents
• a (rotational) speed (145), and/or
• an acceleration, and/or
• a speed of rotation, and/or
• a force (155) which acts on the at least one pedal.

3. Method according to Claim 1 or 2, **characterized in that** the threshold value is zero or a positive value close to zero.

4. Method according to one of the preceding claims, **characterized in that**, in the assistance mode, the drive which acts on the vehicle by way of the motor (160) is reduced, it being provided, in particular, that the drive is reduced to zero.

5. Method according to Claim 4, **characterized in that** the motor (160) is actuated in an intermittently operated manner in a manner which is dependent on the state variable of the pedal, a check of the state variable being carried out again after a reduction or interruption of the drive.

6. Control apparatus having a control method for the motor of a pedal-powered vehicle according to one of Claims 1 to 5, it being provided that the motor (160) has an assistance mode which assists the rider during pushing of the vehicle, **characterized in that**, in the assistance mode, the control apparatus (100)
• detects a state variable (135) of at least one pedal, the state variable representing a torque (135), and
• compares the state variable (135) with a threshold value if a rise in the state variable (135) is detected, the control apparatus changing the drive of the vehicle at least briefly in the case of the threshold value being exceeded or undershot, as a result of which
• the drive which acts on the vehicle by way of the motor (160) is interrupted at least temporarily if it is detected in the case of the consideration of the torque by way of a rise in the variable that at least one pedal encounters an obstacle.

7. Control apparatus according to Claim 6, **characterized in that** the control apparatus (100) detects, as a state variable,
• a (rotational) speed (145), and/or
• an acceleration, and/or
• a speed of rotation, and/or
• a force (155) which acts on the at least one pedal.

8. Control apparatus according to Claim 6 or 7, **characterized in that** the control apparatus (100) compares the state variable (135, 145, 155) with a threshold value which has a value of zero or close to zero.

9. Pedal-powered vehicle having a control apparatus (100) according to one of Claims 6 to 8.

## Revendications

1. Procédé de commande du moteur d'un véhicule entraîné par des pédales, dans lequel il est prévu que le moteur (160) présente un mode d'assistance qui assiste le conducteur lors de la poussée du véhicule, **caractérisé en ce que**, dans le mode d'assistance, le procédé
• détecte une grandeur d'état (135) d'au moins une pédale, la grandeur d'état représentant un couple (135), et
• la grandeur d'état (135) est comparée à une valeur de seuil lorsqu'une augmentation de la grandeur d'état (135) est détectée, l'entraînement du véhicule étant modifié au moins brièvement lorsque la valeur de seuil est franchie vers le haut ou vers le bas, de sorte que
• l'entraînement agissant sur le véhicule est interrompu par le moteur (160) lorsque, dans le cas où le couple est pris en compte par une augmentation de ladite grandeur, au moins une pédale heurte un obstacle.

2. Procédé selon la revendication 1, **caractérisé en ce que** la grandeur d'état représente
• une vitesse (de rotation) (145), et/ou
• une accélération, et/ou
• une vitesse et/ou
• une force (155) agissant sur ladite au moins une pédale.

3. Procédé selon la revendication 1 ou 2, **caractérisé en ce que** la valeur de seuil est nulle ou égale à une grandeur positive pratiquement nulle.

4. Procédé selon l'une des revendications précédentes, **caractérisé en ce que**, dans le mode d'assistance, l'entraînement agissant sur le véhicule est réduit par le moteur (160), dans lequel il est notamment prévu que l'entraînement soit réduit à zéro.

5. Procédé selon la revendication 4, **caractérisé en ce que** le moteur (160) est entraîné de manière rythmée en fonction de la grandeur d'état de la pédale, dans lequel, après une réduction ou une interruption de l'entraînement, une vérification de la grandeur d'état est à nouveau effectuée.

6. Dispositif de commande utilisant un procédé de commande du moteur d'un véhicule entraîné par des pédales selon l'une des revendications 1 à 5, dans lequel il est prévu que le moteur (160) présente un mode d'assistance qui assiste le conducteur lors de la poussée du véhicule, **caractérisé en ce que**, dans le mode d'assistance, le dispositif de commande (100)
• détecte une grandeur d'état (135) d'au moins une pédale, la grandeur d'état représentant un couple (135),
• compare la grandeur d'état (135) à une valeur de seuil lorsqu'une augmentation de la grandeur d'état (135) est détectée, le dispositif de commande modifiant l'entraînement du véhicule au moins temporairement lorsque la valeur de seuil est franchie vers le haut ou vers le bas, de sorte que
• l'entraînement agissant sur le véhicule est au moins temporairement interrompu par le moteur (160) lorsque, dans le cas où le couple est pris en compte par une augmentation de ladite grandeur, il est détecté qu'au moins une pédale heurte un obstacle.

7. Dispositif de commande selon la revendication 6, **caractérisé en ce que** le dispositif de commande (100) détecte en tant que grandeur d'état
• une vitesse (de rotation) (145), et/ou
• une accélération, et/ou
• une vitesse et/ou
• une force (155) agissant sur ladite au moins une pédale.

8. Dispositif de commande selon la revendication 6 ou 7, **caractérisé en ce que** le dispositif de commande (100) compare la grandeur d'état (135, 145, 155) à une valeur de seuil nulle ou pratiquement nulle.

9. Véhicule à pédales comportant un dispositif de commande (100) selon l'une des revendications 6 à 8.
